# EUROPEAN PATENT SPECIFICATION

(11) **EP 3 061 648 B1**
(45) Date of publication and mention of the grant of the patent: **18.04.2018**
(21) Application number: 15156347.5
(22) Date of filing: 24.02.2015
(51) Int. Cl.: B60P 1/38, B65G 67/20

(54) **Unloading system for unit load**
Entladesystem für Ladungseinheit
Système de déchargement pour charge unitaire

(43) Date of publication of application: 31.08.2016
(73) Proprietor: PHS Logistiktechnik GmbH, 8054 Graz (AT)
(72) Inventor: Wolfschluckner, Andreas, 8010 Graz (AT)
(74) Representative: KLIMENT & HENHAPEL

(56) References cited:
- EP-A1- 2 338 727
- WO-A1-2010/109094
- DE-A1- 2 501 414
- DE-U1- 8 427 341
- FR-A1- 2 821 806
- GB-A- 885 879
- US-A- 4 749 325
- US-A- 4 892 456
- US-A- 5 902 090
- US-A1- 2012 087 770

## Description

### FIELD OF THE INVENTION

The present invention relates to a system for unloading items from a container positioned in an unloading bay, the system comprising a first belt, wherein in a first state of the system a load section of the first belt is configured for covering a floor of the container, enabling arrangement of the items on the load section, the system further comprising a traction mechanism for being provided at the unloading bay, wherein the first belt comprises at least one first fastening means and the traction mechanism comprises at least one second fastening means for coupling the first belt to the traction mechanism, wherein the traction mechanism is configured such that at least a part of the load section of the coupled first belt can be pulled out of the container by means of the traction mechanism, in order to bring the system from the first state to a second state.

### STATE OF THE ART

Since several years the parcel service market is growing continuously, which is at least partially driven by increasing numbers of online orders. Usually, parcels or other unit load are transported by means of containers to parcel distribution centres, where the parcels are unloaded manually. The latter process is time consuming and can be critical from the viewpoint of occupational medicine, since heavy items have to be lifted by personnel frequently and non-ergonomically. Device developments for automation of the unloading process are quite complex and expensive so far and hence hardly in use.

One example for such known device is disclosed by US 2012/0087770 A1, relating to a system with a base belt located in a container, on which base belt a plurality of items is arranged. For unloading an apparatus is moved into the container, the apparatus comprising a tensioning mechanism, in order to tension the base belt for enabling passing of a ramp under the base belt. This in turn allows for removing a first item by means of a conveyor, while a stack control curtain is retaining other items. Since the conveyor as well as the stack control curtain have to be moved into the container, very high demands on movement control are made.

WO 2010/109094 A1 discloses a system according to the preamble of claim 1 comprising a conveyor belt for loading and unloading of a vehicle, with the conveyor belt moving between the vehicle and a platform. Thereby, the conveyor belt is pulled by a building-side and vehicle-side pulling means in the form of belts that are connected to the conveyor belt by means of a hook system. The belts are in turn driven by motorised winches situated on the platform and the vehicle.

US 4749325 A teaches a device for unloading a truck with a bed, employing a slip floor on which items may be arranged. It is possible to pull the slip floor out of the truck with the items being still arranged on the slip floor, in order to unload the truck at an unloading platform. Cables and rings are mounted to the slip floor, enabling coupling with a belt having hooks, in order to pull at the slip floor. Thereby, the belt is operated by a powered winding roll.

Thus, it is the object of the present invention to provide a system for unloading unit load from a container, which overcomes the above mentioned disadvantages. Particularly, it is the object of the present invention to provide a system which has a simple structure and which can easily be implemented with existing containers and at existing parcel distribution centres.

### SUMMARY OF THE INVENTION

For solving the above mentioned problems a system for unloading times from a container positioned in an unloading bay is suggested, which system comprises a mobile part for being provided with the container and a stationary part for being provided at the unloading bay. The container can be transported by a transport vehicle or can be integrated into a transport vehicle. Preferably, the unloading bay may be used for loading of items into the container too.

The structure of the mobile part is very simple, allowing for easy and cheap retrofitting of existing containers. The mobile part comprises a first belt which can be used for covering a floor of the container such that items can be arranged on the first belt. Complementary fastening means of the mobile part and the stationary part allow for coupling of the mobile part with the stationary part, enabling acting of the stationary part on the mobile part. Particularly, the stationary part comprises a traction mechanism which allows pulling of the first belt coupled to the stationary part and the traction mechanism, respectively. Naturally, if the first belt is pulled, also items arranged on the first belt are pulled. Hence, the system according to the present invention can be used for unloading items from the container.

Therefore, a system for unloading items from a container positioned in an unloading bay is provided, the system comprising a first belt, wherein in a first state of the system a load section of the first belt is configured for covering a floor of the container, enabling arrangement of the items on the load section, wherein according to the present invention it is provided that the system comprises a traction mechanism for being provided at the unloading bay, wherein the first belt comprises at least one first fastening means and the traction mechanism comprises at least one second fastening means for coupling the first belt to the traction mechanism, wherein the traction mechanism is configured such that at least a part of the load section of the coupled first belt can be pulled out of the container by means of the traction mechanism, in order to bring the system from the first state to a second state. This means that in the second state the first belt is configured for being at least partly pulled out of the container by means of the traction mechanism.

Preferably, at least one traction means, like a strap, a belt or a tape, is provided which is to be coupled with the first belt. The at least one traction means can be stored using a storage element - which is referred to as "second storage element" in the following -, in order to save space at the unloading bay. Moreover, also at least part of the coupled load section, which is pulled by the at least one traction means, can be stored in the second storage element. An example for such a second storage element would be a box in which the at least one traction means and at least part of the load section can be stored in a folded way. Another example for such a second storage element would be a reel onto which the at least one traction means and at least part of the load section can be wound. Correspondingly, in a preferred embodiment of the system according to the present invention it is provided that the traction mechanism comprises at least one traction means, a second storage element for storage of the at least one traction means and at least a part of the load section, the traction mechanism preferably further comprising a motor, particularly for driving the second storage element.

Even though it is conceivable to drive the at least one traction means manually, a motor will be deployed usually, for speeding up the whole process, with the motor preferably driving an element of the traction mechanism, in order to act on the at least one traction means. In case the second storage element is of a reel type, the motor may drive the second storage element for acting on the at least one traction means.

Accordingly, in a preferred embodiment of the system according to the present invention it is provided that the at least one traction means comprises a second belt. Moreover, in a preferred embodiment of the system according to the present invention it is provided that the second storage element comprises a second reel.

In order to bring the system from the second state back to the first state, it is provided in a preferred embodiment of the system according to the present invention that retraction means are provided for retracting at least the first belt. Preferably, also the at least one traction means, which is coupled to the first belt, particularly the coupled second belt, can be retracted by the retraction means. An example for such retraction means would be a motor acting on the first belt. Another example for such retraction means would be means enabling a manual retraction by a user.

Preferably, the retraction means are part of the mobile part of the system. In order to allow for a particularly simple structure of such retraction means, it is provided in a preferred embodiment of the system according to the present invention that the retraction means comprise a retracting section of the first belt and a first storage element, which retracting section is stored by means of the first storage element in the first state of the system, wherein at least a part of the retracting section is configured for covering the floor of the container in the second state of the system.

In order to guarantee that the whole load section can be pulled out of the container, it is provided in a preferred embodiment of the system according to the present invention that a length of the retracting section is at least as large as a length of the container and an overall length of the first belt is at least twice as large as the length of the container. Said lengths are measured along a conveying direction pointing from a rear wall of the container to a front side of the container, with the front side facing the unloading bay and being open for unloading of the items.

In order to achieve particularly simple retraction means without a motor needing an energy supply, it is provided in a preferred embodiment of the system according to the present invention that the retraction means comprise a spring which is configured such that the spring is tensioned when the system is brought from the first to the second state and by retracting at least the first belt the tension is released. Preferably, also the at least one traction means, which is coupled to the first belt, particularly the coupled second belt, can be retracted by releasing the tension of the spring.

An example for the first storage element would be a box in which the retracting section of the first belt can be stored in a folded way. Another example for the first storage element would be a reel - in the following referred to as "first reel" - onto which the retracting section of the first belt can be wound. The latter example can be realised in a particularly simple way. Furthermore, the first reel can be easily driven for retracting at least the retracting section of the first belt. For driving the first reel a motor could be provided, for example. However, the first reel is ideally suited for using the spring as driving means, with the spring coupled to a hub of the first reel in a known manner, for example. Accordingly, in a preferred embodiment of the system according to the present invention it is provided that the first storage element comprises a first reel.

There are several options where to mount the first storage element. For example, the first storage element can be arranged inside the container. This has the advantage that the first storage element can be protected from external effects like the weather. Moreover, the first storage element cannot interfere with any transportation means, e.g. transport vehicles, that engage with the exterior of the container. Accordingly, in a preferred embodiment of the system according to the present invention it is provided that the first storage element is configured for being situated within the container, wherein the first storage element has a housing with an inclined shape, in order to let items glide off the housing onto the first belt. Hence, it can be ensured that in the unloading process no items remain within the container.

Alternatively, the first storage element can be arranged outside the container. This provides for maximising the available area on the container floor and the available space in the container, respectively. However, the container has to be adapted for allowing passing of the first belt from outside into the container. Accordingly, in a preferred embodiment of the system according to the present invention it is provided that the system comprises the container. Moreover, in a preferred embodiment of the system according to the present invention it is provided that the first storage element is situated outside the container, with an opening being provided in the container and allowing for passage of the first belt.

In order to transport those items that originally are arranged on the load section not only out of the container, but also away from the container, it is provided in the system according to the present invention that the system comprises a conveyor for being provided at the unloading bay, wherein the conveyor is arranged relative to the traction mechanism such that items arranged on the load section are transferred along a conveying direction onto the conveyor while the first belt is pulled by the traction mechanism.

In order to effect a singulation of the items, it is provided in a preferred embodiment of the system according to the present invention that the conveyor is configured such that a conveying velocity of the conveyor is greater than a conveying velocity of the load section while the first belt is pulled by the traction mechanism. Hence, when the items reach the conveyor they are abruptly accelerated. If the items are arranged in stacks with one ore more items being placed atop a first item lying directly on the first belt, the items fall off the first item due to the abrupt acceleration of the first item.

Hence, a three-dimensional item arrangement on the first belt can be reduced to an essentially two-dimensional item arrangement on the conveyor.

In a preferred embodiment of the system according to the present invention it is provided that a sliding plate is provided for facilitating the transfer of items onto the conveyor, wherein the sliding plate is arranged in a region of a beginning of the conveyor when viewed in conveying direction. For example, the sliding plate can be used to bridge a gap before the beginning of the conveyor when viewed in conveying direction.

In order to improve the singulation, it is provided in a preferred embodiment of the system according to the present invention that a de-stacking means, preferably a curtain is provided, wherein the de-stacking means is arranged above the conveyor for retaining items placed atop a first item which first item is arranged directly on the conveyor. Generally, the de-stacking means can be a flexible or rigid barrier, preferably arranged above the conveyor.

In a preferred embodiment of the system according to the present invention it is provided that lateral walls are provided for preventing items from falling off the conveyor, which lateral walls are preferably arranged in a tapering way when viewed in the conveying direction. The tapering arrangement allows for a lateral alignment of the items on the conveyor and thus for a reduction of lateral dimensions of following conveying means like a further conveyor.

In order to further prevent items rolling off a stack of items in an uncontrolled way, it is provided in a preferred embodiment of the system according to the present invention that the conveyor is upwardly inclined when viewed in conveying direction.

In a preferred embodiment of the system according to the present invention it is provided that the at least one first fastening means and the at least one second fastening means are configured such that the coupling of the first belt with the traction mechanism is a form-fit coupling and/or a force-fit coupling. For example, the fastening means can be of the hook and loop type. Alternatively or additionally, the fastening means could be at least partially magnetic for employing magnetic interaction for coupling. The system according to the present invention is provided with a compensation system, with the traction mechanism being mounted on the compensation system for compensating an offset and/or a misorientation of the traction mechanism to the first belt, in order to enable coupling of the first belt with the traction mechanism. By means of the compensation system the height level and the orientation of the traction mechanism can be adjusted in a known manner.

### BRIEF DESCRIPTION OF FIGURES

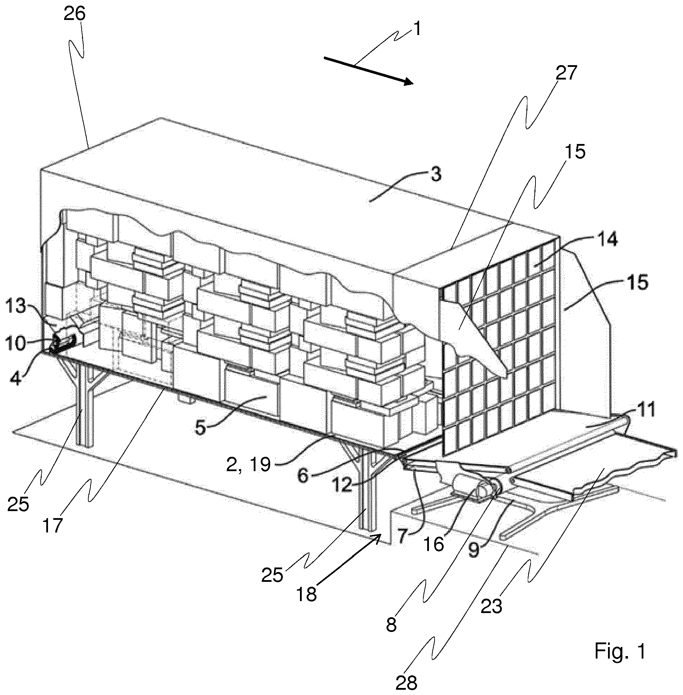

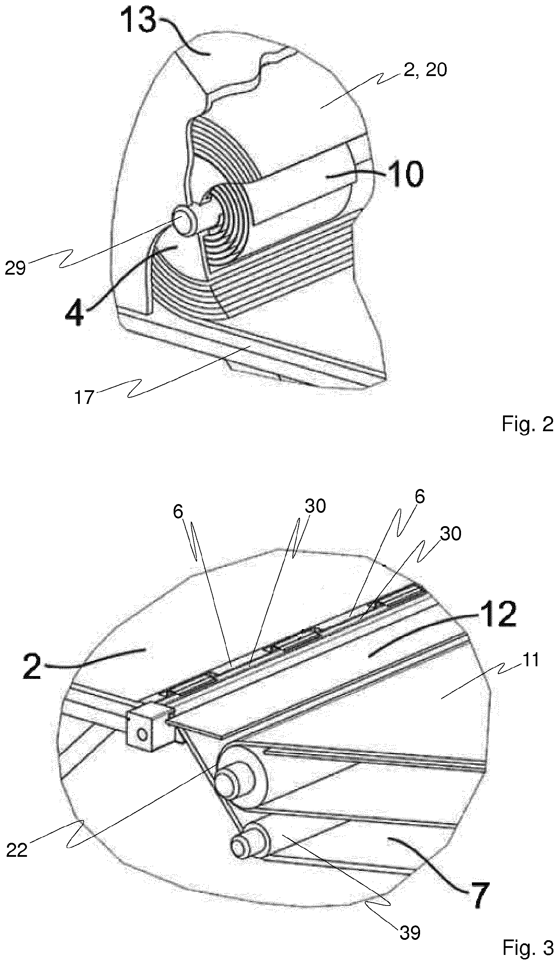

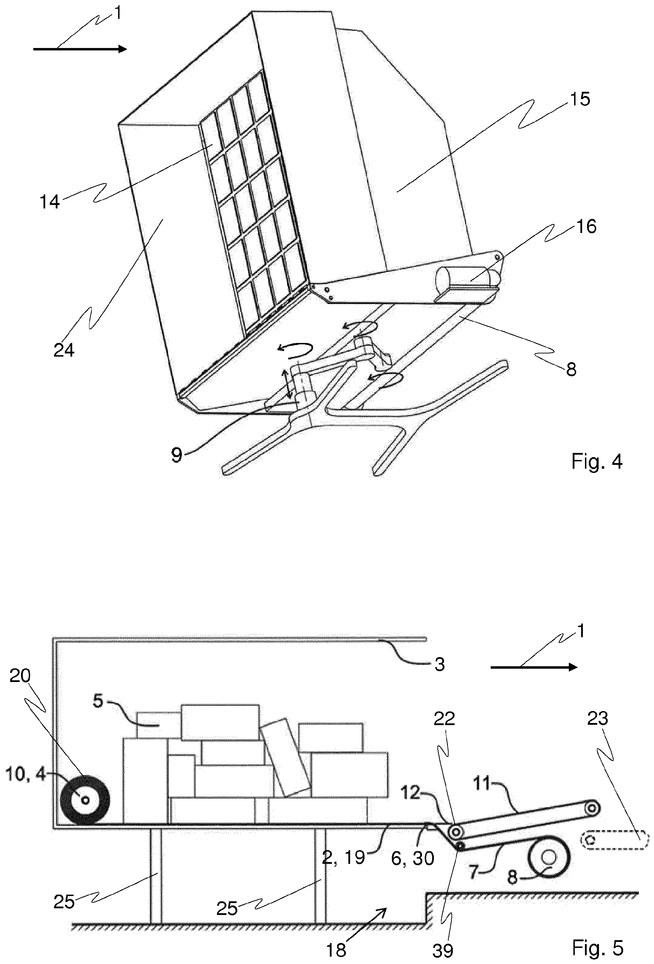

The invention will be explained in closer detail by reference to preferred embodiments, with Fig. 1 showing a three-dimensional, partially sectional view of a system according to the present invention in use with a container positioned in an unloading bay Fig. 2 showing a detailed view of a first reel in Fig. 1 Fig. 3 showing a detailed view of a region of a beginning of a conveyor in Fig. 1 Fig. 4 showing a three-dimensional view of a compensation system in Fig. 1 seen from below Fig. 5 showing a sectional view of another embodiment of the system according to the present invention in use with a container positioned in an unloading bay
- Fig. 6: showing a sectional view of further embodiment of the system according to the present invention with a container positioned in an unloading bay
- Fig. 7: showing a sectional view of further embodiment of the system according to the present invention with a container positioned in an unloading bay
- Fig. 8: showing a sectional view of further embodiment of the system according to the present invention in use with a container positioned in an unloading bay
- Fig. 9: showing a sectional view of another embodiment of the system according to the present invention in use with a container positioned in an unloading bay
- Figs. 10a-d: schematically illustrating several variants of first and second fastening means by sectional views
- Fig. 11: showing the embodiment of Fig. 1 in a second state

### WAYS FOR CARRYING OUT THE INVENTION

Fig. 1 shows a container 3 filled with unit load in form of parcels 5, the container 3 being arranged in an unloading bay 18, in order to be unloaded. In the shown example the container 3 rests on a scaffold-like container support 25 at a certain (height) level above the ground. Principally, the container 3 could also be supported by a transport vehicle or could be an integrated part of a transport vehicle too.

For enabling an automatic unloading of the parcels 5 a system according the present invention is provided, the system having a mobile part provided with the container 3 and a stationary part provided at the unloading bay 18.

In Fig. 1 the system is in a first state. Thereby, the mobile part of the system comprises a first belt 2 with a load section 19 covering a floor 17 of the container 3. In the shown embodiments the load section 19 covers the floor 17 for the most part, with the parcels 5 being arranged in stacks located on the load section 19.

The stationary part of the system comprises a traction mechanism which is situated on a step 28 of the unloading bay 18 in the embodiment shown in Fig. 1. The traction mechanism serves for pulling out at least part of the load section 19, in order to bring the system from the first state to a second state, thereby unloading the parcels 5. Accordingly, the traction mechanism comprises at least one traction means which can be coupled to the first belt 2 by means of at least one first fastening means 6 of the first belt 2 and at least one complementary second fastening means 30 of the traction mechanism.

In the shown embodiments the at least one traction means comprises a second belt 7. In the detailed view of Fig. 3 several first fastening means 6 of the first belt 2 and several second fastening means 30 of the second belt 7 are recognisable, with the fastening means 6, 30 preferably being of a hook and loop type.

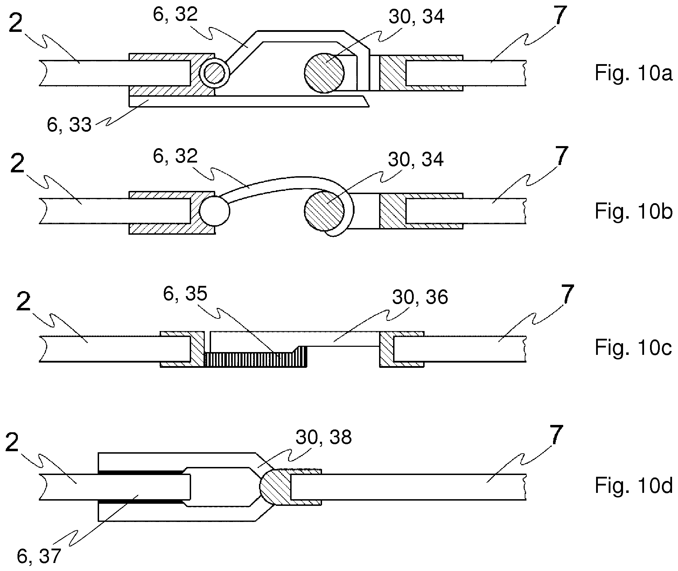

However, a plurality of other variants for complementary first and second fastening means 6, 30 is conceivable, as is exemplified by Figs. 10a to 10d. In Fig. 10a the first fastening means 6 comprises a kind of swivelling hook 32 and a plate 33 that are attached to the first belt 2. The second fastening means 30 comprises an eye 34 attached to the second belt 7. At least part of the eye 34 can be arranged on the plate 33, allowing for engagement of the hook 32 with the eye 34 such that a part of the eye 34 is arranged between the hook 32 and the plate 33. Hence, a form-fit coupling of the first belt 2 with the second belt 7 and the traction mechanism, respectively, is realised.

Similarly, in Fig. 10b the first fastening means 6 comprises a hook 32, which is attached to the first belt 2 and which preferably can be swivelled. The second fastening means 30 comprises an eye 34 attached to the second belt 7, allowing for engagement of the hook 32 with the eye 34. Hence, a form-fit coupling of the first belt 2 with the second belt 7 and the traction mechanism, respectively, is realised.

In Fig. 10c the first fastening means 6 comprises a magnetic plate 35 attached to the first belt 2. For example, the magnetic plate 35 can be made of or may comprise at least one permanent magnet. Moreover, the shape of the cross section of the plate 35, which is shown in Fig. 10c, resembles a hook at a free end of the plate 35. The second fastening means 30 comprises a plate 36 made of or comprising at least one ferromagnetic material, allowing for engagement of plates 35, 36 by means of magnetic force. Moreover, the shape of the cross section of the plate 36, which is shown in Fig. 10c, resembles a hook at a free end of the plate 36, with the shape being complementary to the one of the plate 35. Thus, also a form-fit coupling between plates 35, 36 is given. Hence, both a form-fit coupling and a force-fit coupling of the first belt 2 with the second belt 7 and the traction mechanism, respectively, are realised.

In Fig. 10d the first fastening means 6 is constituted by a free end section 37 of the first belt 2 only. The second fastening means 30 comprises a clamp 38 for gripping of the free end section 37 between to arms of the clamp 38. Hence, a force-fit coupling of the first belt 2 with the second belt 7 and the traction mechanism, respectively, is realised.

Furthermore, the traction mechanism comprises a second storage element in the form of a second reel 8 for storage of the second belt 7 by winding up the second belt 7 onto the second reel 8, i.e. the second belt 7 is coupled to the second reel 8. For doing so, the traction mechanism comprises a drive motor 16 for driving the second reel 8 in a certain direction of rotation.

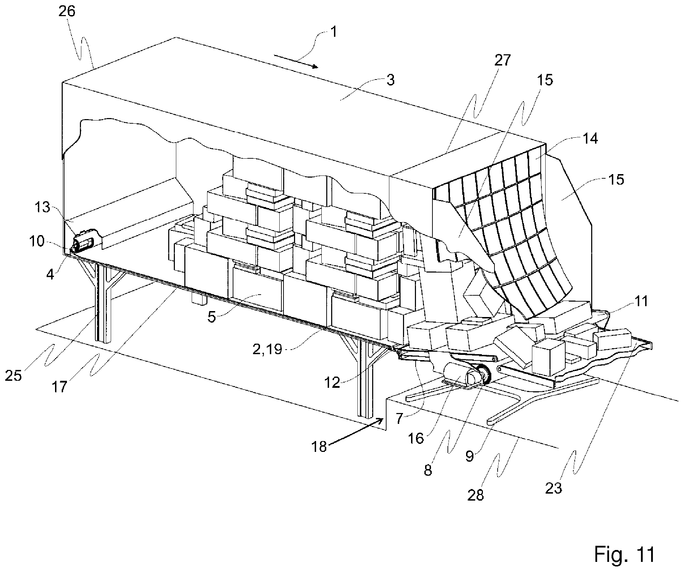

With the first belt 2 being coupled to the second belt 7, the system is brought into a second state, which is illustrated in Fig. 11, by driving the second reel 8. In this second state at least a part of the load section 19 is pulled out of the container 3. Correspondingly, those parcels 5 that were located on this part of the load section 19 in the first state of the system are unloaded from the container 3 now.

Due to the coupling between the belts 2, 7 also part of the first belt 2 can be wound around the second reel 8 for storage. This can particularly be the case if at least the whole load section 19 is pulled out of the container 3, in order to ensure that indeed all parcels 5 are transferred out of the container 3.

The load section 19 is pulled out of the container 3 along a conveying direction 1, which conveying direction 1 points from a rear wall 26 of the container 3 to a front side 27 of the container 3. The front side 27 is situated opposite the rear wall 26. In the shown embodiments the front side 27 is open (doors for closing are not shown for the sake of clarity) and is facing the unloading bay 18, enabling coupling between the mobile and the stationary part of the system.

For facilitating pulling of the load section 19 at least the load section 19 of the first belt 2 is configured such that the friction between the first belt 2 and the floor 17 is low. For example, that side of the first belt 2, which is configured for facing the floor 17 of the container 3, can be made of or can at least comprise a polyester (PET) fabric, in order to realise a small friction coefficient between the first belt 2 and the floor 17. Preferably, at least the load section 19 of the first belt 2 is either made of or coated (on the side facing the floor 17) with a low-friction material like ultra-high-molecular-weight polyethylene (UHMWPE), which is also known as high-modulus polyethylene (HMPE) or high-performance polyethylene (HPPE).

In Fig. 3 it is also very well recognisable that in the embodiment shown in Fig. 1 the traction mechanism comprises a guide roller 39 for guiding the second belt 7 - and of course also the first belt 2 when the system is brought from its first to its second state - from the floor 17 ending on the front side 27 of the container 3 to the second reel 8.

In order to bring the system back to its first state after all parcels 5 are unloaded from the container 3, retraction means are provided for retracting at least the first belt 2 and preferably also the second belt 7. In the shown embodiments the retraction means comprise a retracting section 20 of the first belt 2. In the first state of the system, the retracting section 20 of the first belt 2 is wound around a first reel 4 for storage, i.e. the first reel 4 constitutes a first storage element for the retracting section 20.

In the embodiment shown in Fig. 1 the first reel 4 is arranged in a housing 13 which housing 13 is situated on the floor 17 adjacent to the rear wall 26 of the container 3. Seen in the conveying direction 1 the housing 13 has an inclined shape pointing downwards. This inclination assures that parcels 5 glide off the housing 13 onto the first belt 2 and do not stay on the housing 13. This means that all parcels 5 can be unloaded and no parcel 5 remains in the container 3.

While the load section 19 is pulled out of the container 3 the retracting section 20 or at least a part of the retracting section 20 is wound off the first reel 4 and is eventually covering the floor 17.

Preferably, a length of the retracting section 20 is at least as large as a length of the container 3, in order to ensure that indeed the whole load section 19 can be pulled out of the container 3, with the mentioned lengths being measured along the conveying direction 1. Accordingly, an overall length of the first belt is at least twice as large as the length of the container 3.

The retraction means further comprise a spring 10. In the unwinding process the first reel 4 is rotated, which rotation causes tensioning of the spring 10. The spring 10 is coupled to a hub 29 of the first reel 4 in a known manner, cf. Fig. 2 showing a detailed view of the first reel 4.

The tensioned spring 10 is used for winding up the retracting section 20 again, thereby pulling the load section 19 back into the container 3 for re-establishing the first state of the system - without the need for an additional motor. After the parcels 5 are unloaded and conveyed away from the second belt 7, the second reel 8 may be driven in an opposite rotational direction, opposite to the certain direction of rotation, by means of the motor 16, for example. Thereby, the spring 10 ensures that the retracting section 20 is wound up onto the first reel 4 again and the motor 16 can be used as kind of brake for adjusting the speed of retraction of the belts 2, 7, in order to guarantee a controlled and save retraction. Of course it also is conceivable to provide additional braking means for that purpose, with the additional braking means preferably being part of the traction mechanism.

Alternatively, a coupling between the motor 16 and the second reel 8 may be just released, for example, in order to let the spring 10 drive the second reel 8 in the opposite rotational direction while winding up the retracting section 20. Finally, also the second belt 4 can be wound off the second reel 8.

In order to convey the parcels 5 not only out of, but also away from the
container 3, a conveyor 11, a belt conveyor is provided. The conveyor 11 is arranged relative to the traction mechanism - and vice versa - such that the parcels 5 on the first belt 2 are transferred onto the conveyor 11 while the first belt 2 is pulled out of the container 3. A skilled person can find many different arrangements that fulfil this condition. In the embodiments shown in Figs. 1, 3, 5, 6, and 7 the conveyor 11 is positioned above the second reel 8. Viewed in conveying direction 1 a beginning 22 of the conveyor 11 is arranged adjacent to the front side 27 and essentially on the same level as the floor 17 of the container 3 or at least close to that level. Accordingly, the first belt 2 is pulled under the conveyer 11 and the parcels 5 glide from the first belt 2 onto the conveyor 11 almost immediately after having left the container 3.

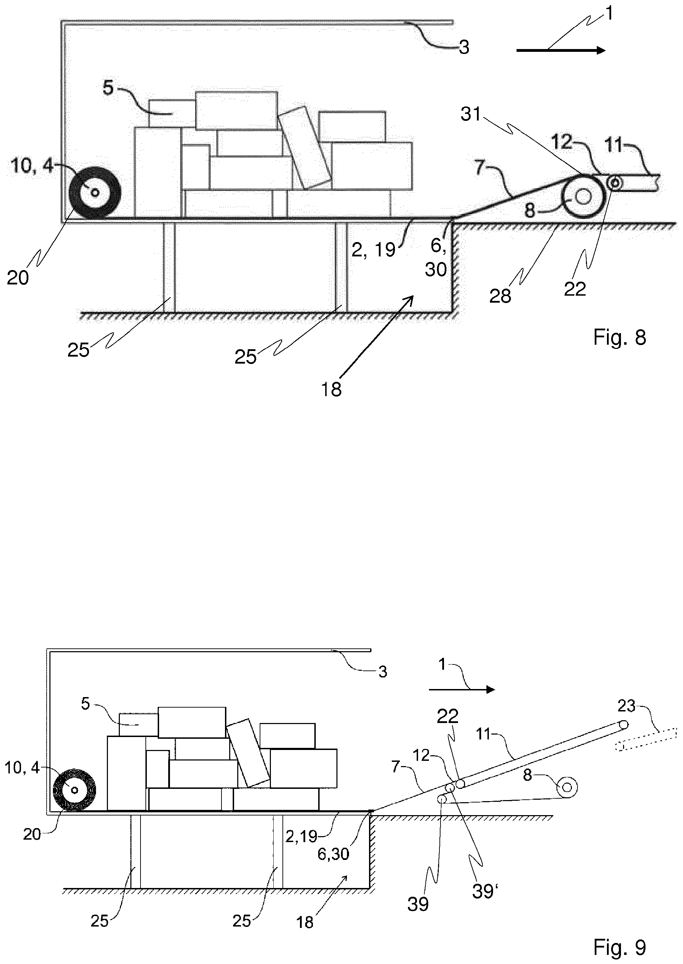

Fig. 9 shows another embodiment, similarly to the embodiment shown in Fig. 5. In Fig. 9 the conveyor 11 is, however, positioned farther behind the container 3 when viewed in conveying direction 1, with the beginning 22 of the conveyor 11 not being adjacent to the front side 27 of the container 3. The resulting distance between the container 3 and the conveyor 11 is spanned by the second belt 7 when the system is in its first state. In its second state said distance can be spanned by the first belt 2 too. In order to guide the belts 2, 7 to the second reel 8, two guide rollers 39, 39' are used that are arranged at different levels. The beginning 22 of the conveyor 11 is arranged adjacent to the higher guide roller 39'. Also this arrangement enables pulling of the first belt 2 under the conveyor 11, in order to let the parcels 5 glide off the first belt 2 onto the conveyor 11.

Fig. 8 shows another embodiment with the conveyor 11 being arranged behind the second reel 8 viewed in conveying direction. In this case the parcels 5 are conveyed on the first belt 2 over a certain distance after having left the container 3. Just when the winding up of the first belt 2 onto the second reel 8 is started the parcels 5 glide from the first belt 2 onto the conveyor 11.

In the embodiment shown in Fig. 8 this happens when the first belt 2 contacts the second reel 8 in a region around a highest point 31 of the second reel 8 above the ground of the step 28 of the unloading bay 18, where the second reel 8 is positioned. Since the level of the highest point 31 of the second reel 8 is higher than the level of the floor 17 of the container 3, the parcels 5 are transported slightly upwardly between the front side 27 of the container 3 and the second reel 8 and the conveyor 11, respectively. This inclination fosters de-stacking of the parcels 5 in a controlled way and helps preventing parcels 5 from rolling off each other in an uncontrolled way.

Analogously, the conveyor 11 in the embodiments shown in Figs. 1, 3, 5, 6, 7 and 9 is slightly inclined upwardly seen in conveying direction 1, fostering de-stacking of the parcels 5 in a controlled way and helping preventing parcels 5 from rolling off each other in an uncontrolled way.

As can be seen in Figs. 1, 3, 5, 6, 7 and 9 a further conveyor 23, arranged after the conveyor 11 seen in conveying direction 1, can be provided for further transportation of the parcels 5 in a known manner.

In order to facilitate the transfer of the parcels 5 from the first belt 2 onto the conveyor 11, a sliding plate 12 is arranged in a region of the beginning 22 of the conveyor 11. In the embodiments shown in Figs. 1, 3, 5, 6, and 7 said sliding plate 12 bridges a small gap between the container 3 / the floor 17 and the beginning 22 of the conveyor 11. In the embodiment shown in Fig. 8 the sliding plate 12 bridges a small gap between the highest point 31 of the second reel 8 and the beginning 22 of the conveyor 11. In the embodiment shown in Fig. 9 the sliding plate 12 bridges a small gap between the higher guide roller 39' and the beginning 22 of the conveyor 11. Hence, in each shown embodiment the sliding plate 12 prevents parcels 5 from getting caught in the respective gap. Whether a slide plate 12 is really necessary depends on the size of the parcels 5 in relation to the size of the respective gap. The latter is determined by the diameter of the guide rollers 39, 39' and of rollers deployed in the conveyor 11, respectively. Thus, the system can work also without a sliding plate 12, principally.

In each shown embodiment the conveyor 11 conveys the parcels 5 preferably faster than the first belt 2. Hence, a conveying velocity of the conveyor 11 is greater than a conveying velocity of the first belt 2 and its load section 19, respectively, which is pulled out of the container 3. Thereby, the conveying velocities are measured parallel to the conveying direction 1.

The greater conveying velocity of the conveyor 11 already leads to a singulation of the parcels 5. When the parcels 5 reach the conveyor 11 they are abruptly accelerated. If the parcels 5 are arranged in stacks with one ore more parcels 5 being placed atop a first parcel 5 lying directly on the first belt 2, the parcels 5 fall off the first parcel 5 due to the abrupt acceleration of the first parcel 5.

For improving the singulation, a curtain 14 can be provided as de-stacking means, cf. Figs. 1 and 11. The curtain 14 is held in a curtain holding frame 24 defining the position of the curtain 14, particularly relative to the conveyor 11. The curtain 14 is arranged above the conveyor 11, in order to retain parcels 5 that are still placed atop a first parcel 5 lying directly on the conveyor 11.

Hence, a three-dimensional parcel arrangement on the first belt 2 is reduced to an essentially two-dimensional parcel arrangement on the conveyor 11.

In the embodiment shown in Fig. 1 lateral walls 15 are provided for preventing parcels 5 from falling off the conveyor 11. These lateral walls 15 are arranged in a tapering way when viewed in the conveying direction 1, allowing for a lateral alignment of the parcels 5 on the conveyor and thus for a reduction of lateral dimensions of following conveying means like the further conveyor 23.

In order to enable coupling between the first belt 2 and the second belt 7, the position of the first belt 2 and the container 3, respectively, has to be aligned with the position of the second belt 7 and the traction mechanism, respectively. If the container 3 is (or cannot be) positioned sufficiently properly, leaving a certain offset between the first belt 2 and the traction mechanism, the position of the traction mechanism has to be adjusted, in order to compensate for the offset and/or misorientation. Hence, a compensation system 9 is provided at the unloading bay 18, with the traction mechanism being mounted on the compensation system 9. As can be seen in the detailed view of Fig. 4 the compensation system 9 allows for adjustment of the level (cf. the double arrow in Fig. 4) of the traction mechanism, i.e. of the second belt, the second reel 8 and the drive motor 16. Furthermore, the traction mechanism can be turned about three rotational axes (vgl. the three curved arrows in Fig. 4), in order to account for a misorientation. Hence, the traction mechanism and the first belt 2 can be perfectly aligned by means of the compensation system 9. It has to be emphasised that Fig. 4 only shows an example of a compensation system 9 suitable for compensating the offset and/or misorientation. A skilled person can find many other different embodiments of suitable compensation systems 9.

In the embodiment shown in Fig. 4 also the curtain holding frame 24 with the curtain 14 and the lateral walls 15 are mounted on the compensation system 9. Accordingly, these elements are aligned concurrently with the traction mechanism.

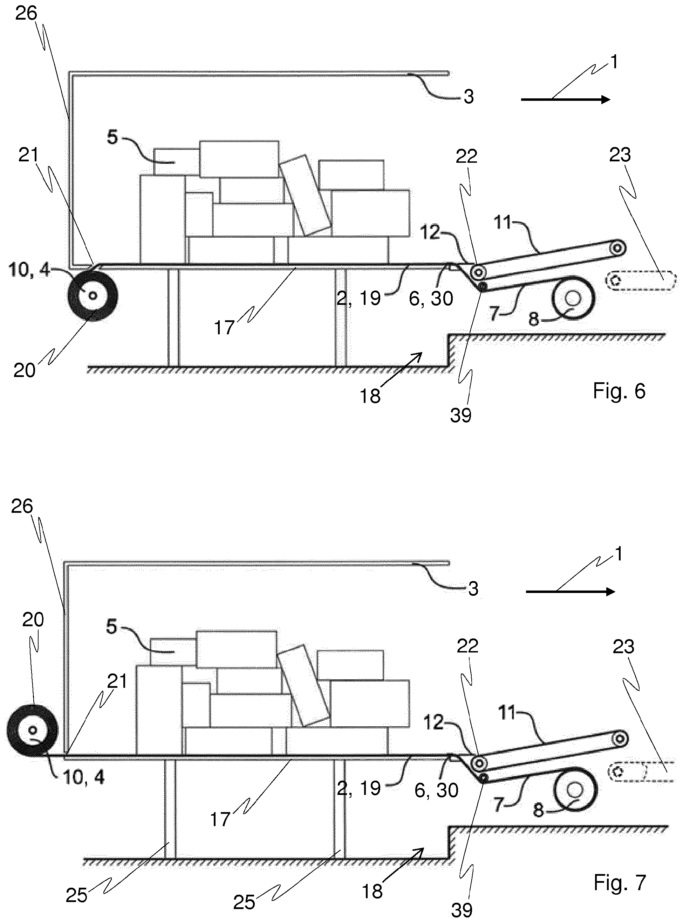

As explained above, in the embodiment shown in Fig. 1 the first reel 4 is arranged inside the container 3. The same holds for the embodiments shown in Figs. 5 and 8. However, the present invention is not limited to those cases. Figs. 6 and 7 show embodiments with the first reel 4 being positioned outside the container 3, allowing for maximising the available area on the floor 17 and the available space inside the container 3. In order to allow for passing the first belt 2 from the first reel 2, i.e. from outside, into the container 3, a corresponding opening 21 is provided in the container 3.

In the embodiment shown in Fig. 6 the first reel 2 is arranged below the floor 17, close to the rear wall 26 of the container 3. Accordingly, the opening 21 is disposed in the floor 17, close to the rear wall 26.

In the embodiment shown in Fig. 7 the first reel 2 is arranged in front of the rear wall 26, when viewed in conveying direction 1, and close to the floor 17. Accordingly, the opening 21 is disposed in the rear wall 26, close to the floor 17. In this case, essentially the whole floor 17 can be covered by the load section 19. Hence, the area on the floor 17 and the space inside the container 3, respectively, which can be used for loading of parcels 5, is at the maximum.

As detailed above the parcels 5 are unloaded from the container 3 by bringing the system according to the present invention from its first state to its second state. Afterwards, by bringing the system back to its first state, a container 3 is provided which is empty (not illustrated) and ready to be filled again with unit load, wherein the unit load can be arranged on the load section 19. As soon as the fastening means 6, 30 are released the front side 27 of the container 3 can be closed (not illustrated) and the container 3 can be moved away from the unloading bay 18.

### List of reference signs

- 1: Conveying direction
- 2: First belt
- 3: Container
- 4: First reel
- 5: Parcel
- 6: First fastening means
- 7: Second belt
- 8: Second reel
- 9: Compensation system
- 10: Spring
- 11: Conveyor
- 12: Sliding plate
- 13: Housing of first reel
- 14: Curtain
- 15: Lateral wall
- 16: Drive motor for the second reel
- 17: Floor of the container
- 18: Unloading bay
- 19: Load section of the first belt
- 20: Retracting section of the first belt
- 21: Opening for the first belt
- 22: Beginning of the conveyor
- 23: Further conveyor
- 24: Curtain holding frame
- 25: Container support
- 26: Rear wall of the container
- 27: Front side of the container
- 28: Step of the unloading bay
- 29: Hub of the first reel
- 30: Second fastening means
- 31: Highest point of the second reel
- 32: Hook
- 33: Plate
- 34: Eye
- 35: Magnetic plate
- 36: Ferromagnetic plate
- 37: Free end section of the first belt
- 38: Clamp
- 39, 39': Guide roller

## Claims

1. System for unloading items (5) from a container (3) positioned in an unloading bay (18), the system comprising a first belt (2), wherein in a first state of the system a load section (19) of the first belt (2) is configured for covering a floor (17) of the container (3), enabling arrangement of the items (5) on the load section (19), the system further comprising a traction mechanism (7, 8, 16) for being provided at the unloading bay (18), wherein the first belt (2) comprises at least one first fastening means (6) and the traction mechanism (7, 8, 16) comprises at least one second fastening means (30) for coupling the first belt (2) to the traction mechanism (7, 8, 16), wherein the traction mechanism (7, 8, 16) is configured such that at least a part of the load section (19) of the coupled first belt (2) can be pulled out of the container (3) by means of the traction mechanism (7, 8, 16), in order to bring the system from the first state to a second state, **characterised in that** the system comprises a conveyor (11) for being provided at the unloading bay (18), wherein the conveyor (11) is arranged relative to the traction mechanism (7, 8, 16) such that items (5) arranged on the load section (19) are transferred along a conveying direction (1) onto the conveyor (11) while the first belt (2) is pulled by the traction mechanism (7, 8, 16), and **in that** a compensation system (9) is provided, with the traction mechanism (7, 8, 16) being mounted on the compensation system (9) for compensating an offset and/or a misorientation of the traction mechanism (7, 8, 16) to the first belt (2), in order to enable coupling of the first belt (2) with the traction mechanism (7, 8, 16), wherein the traction mechanism (7, 8, 16) can be turned about three rotational axes.

2. System according to claim 1, **characterised in that** the traction mechanism comprises at least one traction means (7), a second storage element (8) for storage of the at least one traction means (7) and at least a part of the load section (19), the traction mechanism preferably further comprising a motor (16), particularly for driving the second storage element (8).

3. System according to claim 2, **characterised in that** the at least one traction means comprises a second belt (7).

4. System according to any one of claims 2 to 3, **characterised in that** the second storage element comprises a second reel (8).

5. System according to any one of claims 1 to 4, **characterised in that** retraction means (20, 4, 10) are provided for retracting at least the first belt (2), in order to bring the system from the second state back to the first state.

6. System according to claim 5, **characterised in that** the retraction means comprise a retracting section (20) of the first belt (2) and a first storage element (4), which retracting section (20) is stored by means of the first storage element (4) in the first state of the system, wherein at least a part of the retracting section (20) is configured for covering the floor (17) of the container (3) in the second state of the system.

7. System according to claim 6, **characterised in that** a length of the retracting section (20) is at least as large as a length of the container (3) and an overall length of the first belt (2) is at least twice as large as the length of the container (3).

8. System according to any one of claims 5 to 7, **characterised in that** the retraction means comprise a spring (10) which is configured such that the spring (10) is tensioned when the system is brought from the first to the second state and by retracting at least the first belt (2) the tension is released.

9. System according to any one of claims 6 to 8, **characterised in that** the first storage element comprises a first reel (4).

10. System according to any one of claims 6 to 9, **characterised in that** the first storage element (4) is configured for being situated within the container (3), wherein the first storage element (4) has a housing (13) with an inclined shape, in order to let items (5) glide off the housing (13) onto the first belt (2).

11. System according to any one of claims 1 to 10, **characterised in that** the system comprises the container (3).

12. System according to claim 11, **characterised in that** the first storage element (4) is situated outside the container (3), with an opening (21) being provided in the container (3) and allowing for passage of the first belt (2).

13. System according to any one of claims 1 to 12, **characterised in that** a sliding plate (12) is provided for facilitating the transfer of items (5) onto the conveyor (11), wherein the sliding plate (12) is arranged in a region of a beginning (22) of the conveyor (11) when viewed in conveying direction (1).

14. System according to any one of claims 1 to 13, **characterised in that** the conveyor (11) is configured such that a conveying velocity of the conveyor (11) is greater than a conveying velocity of the load section (19) while the first belt (2) is pulled by the traction mechanism (7, 8, 16).

## Patentansprüche

1. System zum Entladen von Gegenständen (5) aus einem Container (3), der in einer Entladebucht (18) platziert ist, wobei das System einen ersten Gurt (2) umfasst, wobei ein Beladungsabschnitt (19) des ersten Gurtes (2) dafür ausgebildet ist, in einem ersten Zustand des Systems einen Boden (17) des Containers (3) zu bedecken, wodurch die Anordnung der Gegenstände (5) auf dem Beladungsabschnitt (19) ermöglicht wird, wobei das System ferner einen Zugmechanismus (7, 8, 16) umfasst, um diesen an der Entladebucht (18) vorzusehen, wobei der erste Gurt (2) mindestens ein erstes Befestigungsmittel (6) umfasst und der Zugmechanismus (7, 8, 16) mindestens ein zweites Befestigungsmittel (30) umfasst, um den ersten Gurt (2) an den Zugmechanismus (7, 8, 16) anzukoppeln, wobei der Zugmechanismus (7, 8, 16) so gestaltet ist, dass zumindest ein Teil des Beladungsabschnitts (19) des angekoppelten ersten Gurts (2) mittels des Zugmechanismus (7, 8, 16) aus dem Container (3) herausgezogen werden kann, um das System aus dem ersten Zustand in einen zweiten Zustand zu bringen, **dadurch gekennzeichnet, dass** das System ein Förderband (11) umfasst, um dieses an der Entladebucht (18) vorzusehen, wobei das Förderband (11) in Bezug auf den Zugmechanismus (7, 8, 16) derart angeordnet ist, dass auf dem Beladungsabschnitt (19) angeordnete Gegenstände (5) entlang einer Förderrichtung (1) auf das Förderband (11) überführt werden, während der erste Gurt (2) von dem Zugmechanismus (7, 8, 16) gezogen wird, und dadurch, dass ein Kompensationssystem (9) vorgesehen ist, wobei der Zugmechanismus (7, 8, 16) an dem Kompensationssystem (9) montiert ist, um einen Versatz und/oder eine Fehlausrichtung des Zugmechanismus (7, 8, 16) zum ersten Gurt (2) zu kompensieren, um eine Kopplung des ersten Gurts (2) mit dem Zugmechanismus (7, 8, 16) zu ermöglichen, wobei der Zugmechanismus (7, 8, 16) um drei Drehachsen gedreht werden kann.

2. System nach Anspruch 1, **dadurch gekennzeichnet, dass** der Zugmechanismus mindestens ein Zugmittel (7), ein zweites Verwahrungselement (8) zur Verwahrung des mindestens einen Zugmittels (7) und mindestens eines Teils des Beladungsabschnitts (19) umfasst, wobei der Zugmechanismus vorzugsweise weiterhin einen Motor (16) umfasst, insbesondere zum Antrieb des zweiten Verwahrungselements (8).

3. System nach Anspruch 2, **dadurch gekennzeichnet, dass** das mindestens eine Zugmittel einen zweiten Gurt (7) umfasst.

4. System nach einem der Ansprüche 2 bis 3, **dadurch gekennzeichnet, dass** das zweite Verwahrungselement eine zweite Trommel (8) umfasst.

5. System nach einem der Ansprüche 1 bis 4, **dadurch gekennzeichnet, dass** Rückziehmittel (20, 4, 10) zum Zurückziehen mindestens des ersten Gurts (2) vorgesehen sind, um das System aus dem zweiten Zustand in den ersten Zustand zurückzubringen.

6. System nach Anspruch 5, **dadurch gekennzeichnet, dass** die Rückziehmittel einen Rückziehabschnitt (20) des ersten Gurts (2) und ein erstes Verwahrungselement (4) umfassen, wobei der Rückziehabschnitt (20) im ersten Zustand des Systems mittels des ersten Verwahrungselements (4) verwahrt ist, wobei zumindest ein Teil des Rückziehabschnitts (20) dafür ausgebildet ist, im zweiten Zustand des Systems den Boden (17) des Containers (3) zu bedecken.

7. System nach Anspruch 6, **dadurch gekennzeichnet, dass** eine Länge des Rückziehabschnitts (20) mindestens so groß ist wie eine Länge des Containers (3) und eine Gesamtlänge des ersten Gurts (2) mindestens doppelt so groß ist wie die Länge des Containers (3).

8. System nach irgendeinem der Ansprüche 5 bis 7, **dadurch gekennzeichnet, dass** die Rückziehmittel eine Feder (10) umfassen, die so gestaltet ist, dass die Feder (10) gespannt wird, wenn das System vom ersten in den zweiten Zustand gebracht wird, und dass die Spannung durch Zurückziehen mindestens des ersten Gurts (2) gelöst wird.

9. System nach einem der Ansprüche 6 bis 8, **dadurch gekennzeichnet, dass** das erste Verwahrungselement eine erste Trommel (4) umfasst.

10. System nach einem der Ansprüche 6 bis 9, **dadurch gekennzeichnet, dass** das erste Verwahrungselement (4) dafür ausgebildet ist, innerhalb des Containers (3) angeordnet zu werden, wobei das erste Verwahrungselement (4) ein Gehäuse (13) mit einer schrägen Form aufweist, um Gegenstände (5) vom Gehäuse (13) auf den ersten Gurt (2) gleiten zu lassen.

11. System nach einem der Ansprüche 1 bis 10, **dadurch gekennzeichnet, dass** das System den Container (3) umfasst.

12. System nach Anspruch 11, **dadurch gekennzeichnet, dass** das erste Verwahrungselement (4) außerhalb des Containers (3) angeordnet ist, wobei in dem Container (3) eine Öffnung (21) vorgesehen ist, die den Durchtritt des ersten Gurts (2) ermöglicht.

13. System nach einem der Ansprüche 1 bis 12, **dadurch gekennzeichnet, dass** eine Gleitplatte (12) vorgesehen ist, um die Überführung von Gegenständen (5) auf das Förderband (11) zu erleichtern, wobei die Gleitplatte (12) in Förderrichtung (1) gesehen in einem Anfangsbereich (22) des Förderbands (11) angeordnet ist.

14. System nach einem der Ansprüche 1 bis 13, **dadurch gekennzeichnet, dass** das Förderband (11) so gestaltet ist, dass eine Fördergeschwindigkeit des Förderbands (11) größer ist als eine Fördergeschwindigkeit des Beladungsabschnitts (19) beim Ziehen des ersten Gurts (2) durch den Zugmechanismus (7, 8, 16).

## Revendications

1. Système pour décharger des articles (5) d'un conteneur (3) positionné dans une baie de déchargement (18), lequel système comprend une première courroie (2), une section de chargement (19) de la première courroie (2) étant configurée pour couvrir un plancher (17) du conteneur (3) dans un premier état du système, en permettant la disposition des articles (5) sur la section de chargement (19), le système comprenant en outre un mécanisme de traction (7, 8, 16) destiné à être disponible dans la baie de déchargement (18), la première courroie (2) comprenant au moins un premier moyen de fixation (6) et le mécanisme de traction (7, 8, 16) comprenant au moins un deuxième moyen de fixation (30) pour coupler la première courroie (2) au mécanisme de traction (7, 8, 16), le mécanisme de traction (7, 8, 16) étant configuré de telle façon qu'une partie au moins de la section de chargement (19) de la première courroie (2) couplée puisse être tirée hors du conteneur (3) au moyen du mécanisme de traction (7, 8, 16) afin d'amener le système du premier état à un deuxième état, **caractérisé en ce que** le système comprend un convoyeur (11) destiné à être disponible dans la baie de déchargement (18), lequel convoyeur (11) est disposé par rapport au mécanisme de traction (7, 8, 16) de telle manière que les articles (5) disposés sur la section de chargement (19) soient transférés le long d'une direction d'acheminement (1) sur le convoyeur (11) tandis que la première courroie (2) est tirée par le mécanisme de traction (7, 8, 16), et **en ce qu'**il est prévu un système de compensation (9), avec le mécanisme de traction (7, 8, 16) monté sur le système de compensation (9) afin de compenser un décalage et/ou une erreur d'orientation du mécanisme de traction (7, 8, 16) par rapport à la première courroie (2), afin de permettre le couplage de la première courroie (2) avec le mécanisme de traction (7, 8, 16), le mécanisme de traction (7, 8, 16) pouvant être tourné autour de trois axes de rotation.

2. Système selon la revendication 1, **caractérisé en ce que** le mécanisme de traction comprend au moins un moyen de traction (7), un deuxième élément de stockage (8) pour le stockage de l'au moins un moyen de traction (7) et au moins une partie de la section de chargement (19), le mécanisme de traction comprenant de préférence un moteur (16), en particulier pour entraîner le deuxième élément de stockage (8).

3. Système selon la revendication 2, **caractérisé en ce que** l'au moins un moyen de traction comprend une deuxième courroie (7).

4. Système selon l'une des revendications 2 à 3, **caractérisé en ce que** le deuxième élément de stockage comprend une deuxième bobine (8).

5. Système selon l'une des revendications 1 à 4, **caractérisé en ce que** des moyens de rétraction (20, 4, 10) sont prévus pour rétracter au moins la première courroie (2) afin de ramener le système du deuxième état au premier état.

6. Système selon la revendication 5, **caractérisé en ce que** les moyens de rétraction comprennent une section de rétraction (20) de la première courroie (2) et une premier élément de stockage (4), laquelle section de rétraction (20) est stockée au moyen du premier élément de stockage (4) dans le premier état du système, une partie au moins de la section de rétraction (20) étant configurée pour couvrir le plancher (17) du conteneur (3) dans le deuxième état du système.

7. Système selon la revendication 6, **caractérisé en ce qu'**une longueur de la section de rétraction (20) est au moins aussi grande qu'une longueur du conteneur (3) et une longueur totale de la première courroie (2) est au moins deux fois plus grande que la longueur du conteneur (3).

8. Système selon l'une des revendications 5 à 7, **caractérisé en ce que** les moyens de rétraction comprennent un ressort (10) configuré de telle sorte que le ressort (10) soit tendu quand le système est amené du premier au deuxième état et que la tension soit relâchée par la rétraction au moins de la première courroie (2).

9. Système selon l'une des revendications 6 à 8, **caractérisé en ce que** le premier élément de stockage comprend une première bobine (4).

10. Système selon l'une des revendications 6 to 9, **caractérisé en ce que** le premier élément de stockage (4) est configuré pour être situé à l'intérieur du conteneur (3), le premier élément de stockage (4) possédant un logement (13) de forme inclinée afin de laisser les articles (5) glisser du logement (13) sur la première courroie (2).

11. Système selon l'une des revendications 1 à 10, **caractérisé en ce que** le système comprend le conteneur (3).

12. Système selon la revendication 11, **caractérisé en ce que** le premier élément de stockage (4) est situé à l'extérieur du conteneur (3), avec une ouverture (21) prévue dans le conteneur (3) et permettant le passage de la première courroie (2).

13. Système selon l'une des revendications 1 à 12, **caractérisé en ce qu'**une plaque de glissière (12) est prévue pour faciliter le transfert d'articles (5) sur le convoyeur (11), la plaque de glissière (12) étant disposée dans une région de début (22) du convoyeur (11), vu dans la direction d'acheminement (1).

14. Système selon l'une des revendications 1 à 13, **caractérisé en ce que** le convoyeur (11) est configuré de telle façon qu'une vitesse d'acheminement du convoyeur (11) soit plus grande qu'une vitesse d'acheminement de la section de chargement (19) pendant que la première courroie (2) est tirée par le mécanisme de traction (7, 8, 16).
